**Europäisches Patentamt**

**European Patent Office**

**Office européen des brevets**

(19)

(11) Veröffentlichungsnummer: **0 118 665**
**B1**

(12) **EUROPÄISCHE PATENTSCHRIFT**

(45) Veröffentlichungstag der Patentschrift:
**13.07.88**

(51) Int. Cl.⁴: **F 24 F 13/08**

(21) Anmeldenummer: **84100315.5**

(22) Anmeldetag: **13.01.84**

(54) Gestänge zur Betätigung und/oder Verbindung von Klappen einer Heizungs-, Lüftungs- oder Klimaanlage.

(30) Priorität: **15.02.83 DE 8304172 U**

(43) Veröffentlichungstag der Anmeldung:
**19.09.84 Patentblatt 84/38**

(45) Bekanntmachung des Hinweises auf die Patenterteilung:
**13.07.88 Patentblatt 88/28**

(84) Benannte Vertragsstaaten:
**DE FR GB IT SE**

(56) Entgegenhaltungen:
**DE - B - 1 237 760**
**FR - A - 2 323 858**
**GB - A - 977 184**
**US - A - 1 190 671**

(73) Patentinhaber: **Süddeutsche Kühlerfabrik Julius Fr. Behr GmbH & Co. KG, Mauserstrasse 3,
D-7000 Stuttgart 30 (DE)**

(72) Erfinder: **Waldmann, Heinrich, Dipl.-Ing., Kreuznacher Strasse 25, D-7000 Stuttgart 50 (DE)**
Erfinder: **Mahninger, Kurt, Rosensteinstrasse 23,
D-7014 Kornwestheim (DE)**

## Beschreibung

Die Erfindung bezieht sich auf ein Gestänge zur Betätigung und/oder Verbindung von Klappen einer Heizungs-, Lüftungs- oder Klimaanlage, insbesondere für Kraftfahrzeuge.

Derartige Gestänge werden beispielsweise zwischen einem Stellmotor und einer Luftführungsklappe oder zwischen zwei Luftführungsklappen, deren Bewegungen synchron erfolgen sollen, benutzt. Da es durch Fertigungstoleranzen oder Montageungenauigkeiten vorkommen kann, dass die Klappen in einer Grundstellung eines Stellmotors oder Bedienungshebels nicht vollständig den Luftführungskanal verschliesst, wurde zur Längeneinstellung des Gestänges ein Gewinde an der Betätigungsstange vorgesehen, so dass die Länge des Gestänges stufenweise entsprechend der Steigung des Gewindes von einem zum nächsten Gewindegang verändert werden kann. Dadurch wird bei einer einzelnen Klappe zwar mit Sicherheit ein Anlegen der Klappe an der Dichtkante erreicht, was in den meisten Fällen jedoch zu sehr hohen Anpresskräften an der Dichtkante führt. Bei synchron zu betätigenden Klappen wird allerdings lediglich das sichere Schliessen einer Klappe erreicht, die andere Klappe weist meist eine gewisse Undichtigkeit auf. Zur Veränderung der Länge des Gestänges wird das bezogen auf die Längsachse drehfest gehaltene Ende ausgehängt und dann die Stange um 360° gedreht, damit das Ende der Stange wieder eingehängt werden kann.

Ganz abgesehen davon, dass diese Art der Einstellung wegen beengter Raumverhältnisse und demzufolge auch Unzugänglichkeit recht problematisch sein kann, ist auch die nur in Stufen entsprechend der Gewindegänge erfolgende Längenänderung unbefriedigend.

Aus der FR-A-2 323 858 ist eine Ausstellvorrichtung für die Flügel von Fenstern, Türen oder dergleichen bekannt die relativ zu einem Lagerbock für das Fenster oder die Tür verschiebbar ist. Die Ausstellvorrichtung ist mittels eines Formstückes in einer entsprechenden Öffnung in einem am Lagerbock befindlichen Zwischenstück längsverschieblich geführt und weist einen Gewindezapfen auf, auf dem eine Einstellmutter angeordnet ist. Durch Drehen der Einstellmutter kann die Länge der Ausstellvorrichtung eingestellt werden.

Es ist daher die Aufgabe der Erfindung, ein Gestänge zur Betätigung und/oder Verbindung von Klappen einer Heizungs-, Lüftungs- oder Klimaanlage zu schaffen, das neben einer leicht durchführbaren stufenlosen Justierung hinsichtlich seiner Länge vor allem ein einfaches Befestigen und eine sichere Fixierung in der justierten Position ermöglicht.

Diese Aufgabe wird bei einem Gestänge der eingangs bezeichneten Art erfindungsgemäss durch die Merkmale des Anspruchs 1 gelöst. Die wesentlichen Vorteile der Erfindung sind insbesondere darin zu sehen, dass nunmehr eine sehr leichte und rasche Justierung der Gestängelänge zum Erreichen eines exakten gleichmässigen Schliessens beider Klappen möglich ist. Dabei ist die Einstellmutter gut zugänglich und wird trotzdem sicher in dem Arm gehalten. Durch das Filmscharnier zwischen den beiden schalenartigen Teilen wird die Anzahl der zu montierenden Teile auf ein Minimum beschränkt.

Damit die schalenartigen Teile miteinander in Eingriff gehalten werden, ist es zweckmässig, dass eines der schalenartigen Teile eine Rastnase aufweist, die in eine Hinterschneidung des anderen schalenartigen Teiles eingreift.

Zur Fixierung der Mutter weist diese eine gerändelte Mantelfläche mit einer Vielzahl von Kerben auf, und in dem zylindrischen Raum ist mindestens ein Vorsprung vorgesehen, der wahlweise mit einer der Kerben in Eingriff bringbar ist. Als besonders vorteilhaft wird angesehen, dass die Anzahl der Kerben der Rändelmutter vierundzwanzig bis vierzig beträgt und die Kerben in axialer Richtung der Rändelmutter verlaufen. Vorzugsweise sind zwei gemeinsam in einem der schalenartigen Teile angeordnete Vorsprünge vorgesehen, die in einem Winkel von ca. 90°, bezogen auf den Umfang der Mutter, angeordnet sind. Dadurch ergibt sich die Möglichkeit, dass die Mutter bei auseinandergeklappten schalenartigen Teilen in einem der Teile drehbar ist und beim Zusammenklappen der Teile automatisch die Arretierung erfolgt. Vorzugsweise ist eines der schalenartigen Teile an der der Betätigungsstange zugewandten Seite des an dem ersten Hebel angreifenden Arms unbeweglich angeordnet und weist an seinen Stirnseiten Wandteile auf, in denen jeweils eine Öffnung zur Aufnahme der Betätigungsstange vorgesehen ist. Damit die Betätigungsstange in diesen Öffnungen gehalten wird, auch wenn die schalenartigen Teile auseinandergeklappt sind, ist es zweckmässig, in den Wandteilen jeweils einen von den Öffnungen ausgehenden, radialen, auf das gegenüberliegende schalenartige Teil gerichteten und nach aussen offenen Schlitz anzuordnen, dessen Breite vorzugsweise etwa das 0,7-fache des Durchmessers der Öffnung beträgt.

Damit die Mutter zum Zwecke der Justierung drehbar ist und trotzdem die Einstelltoleranzen möglichst gering gehalten werden, wird vorgeschlagen, dass die axiale Länge des zylindrischen Raumes 0,05–0,1 mm grösser ist als die axiale Länge der Mutter. Zum Zwecke der einfachen Befestigung des Arms an dem ersten Hebel ist es von Vorteil, dass der Arm Klipse aufweist, die einen Kreis bilden und in eine Öffnung des ersten Hebels eingreifen. Das drehfest gehaltene Ende der Betätigungsstange kann in einfacher Weise durch ein rechtwinkelig abgebogenes Ende der Stange gebildet sein, das in eine Öffnung eines zweiten Hebels eingreift.

Ein Ausführungsbeispiel des erfindungsgemässen Gestänges ist nachstehend anhand der Zeichnung näher erläutert.

In der Zeichnung zeigt:

Figur 1 einen Teil eines Kraftfahrzeugheizungsgehäuses mit mehreren Auslassstutzen und zwei miteinander gekuppelten Klappen,

Figur 2 einen Arm zur Verbindung eines Endes der Stange mit dem Hebel der Klappen,

Figur 3 eine andere Ansicht des Arms gemäss Figur 2,

Figur 4 einen Schnitt nach der Linie IV–IV in Figur 2,

Figur 5 eine Rändelmutter,

Figur 6 einen Schnitt nach der Linie VI–VI in Figur 1.

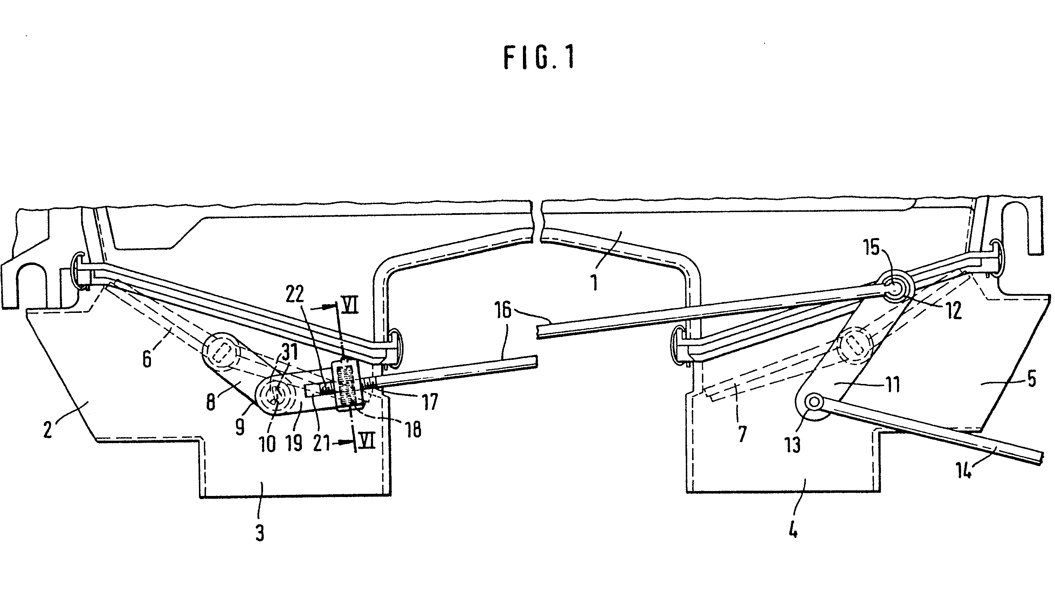

In Figur 1 ist ein Teil eines Gehäuses 1 einer Kraftfahrzeugheizungsanlage dargestellt, das auf der linken Seite zwei Luftaustrittsstutzen 2 und 3 und auf der rechten Seite zwei Luftaustrittsstutzen 4 und 5 aufweist. Die Luftaustrittsstutzen 2 und 3 sind durch eine gemeinsame Absperrklappe 6 und die Luftaustrittsstutzen 4 und 5 durch eine gemeinsame Absperrklappe 7 verschliessbar. Zur Betätigung der Klappe 6 ist an dieser ein an der Schwenkachse der Klappe 6 befestigter Hebel 8 vorgesehen, der an seinem freien Hebelende 9 eine Öffnung 10 aufweist.

An der Absperrklappe 7 ist an deren Schwenkachse ein zweiarmiger Hebel 11 befestigt, der an einem der freien Hebelenden eine Öffnung 12 und an dem anderen Hebelende eine Öffnung 13 aufweist. Die Öffnung 13 dient zur Befestigung einer Betätigungsstange 14, die von einem in der Zeichnung nicht dargestellten Stellmotor bewegt wird. An Stelle der Betätigungsstange 14 könnte auch ein Bowdenzug eines von Hand betätigten Stellgliedes an dem Hebelende mit der Öffnung 13 befestigt sein.

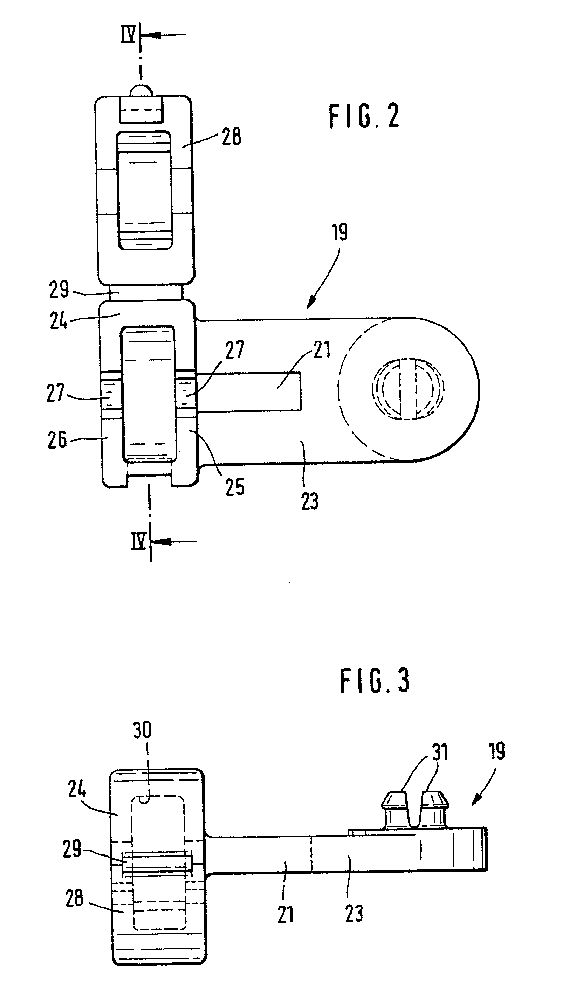

Ein rechtwinklig abgebogenes Ende 15 einer Betätigungsstange 16 greift durch die Öffnung 12 des Hebels 11 und ist darin schwenkbar befestigt. An ihrem anderen Ende weist die Betätigungsstange 16 einen mit einem Gewinde 17 versehenen Abschnitt auf, auf den eine Rändelmutter 18 aufgeschraubt ist. Die Rändelmutter 18 befindet sich – wie nachfolgend zu Figur 2–6 näher erläutert – in einem Arm 19, der mittels zweier Klipse 31 in der Öffnung 10 des freien Hebelendes 9 am Hebel 8 schwenkbar befestigt ist. Der Arm 19 weist eine längliche Öffnung 21 auf, in dem sich das auf der anderen Seite der Rändelmutter 18 hervorstehende Ende 22 der Betätigungsstange 16 befindet.

Figur 2 zeigt den Arm 19 in vergrösserter Darstellung. Der Arm 19 umfasst einen Hauptkörper 23, der an einem Ende in ein schalenartiges Teil 24 übergeht. Das schalenartige Teil ist mit zwei Stirnseiten 25 und 26 versehen, in denen jeweils eine auf einer gemeinsamen Achse befindliche Öffnung 27 angeordnet ist. In dem Hauptkörper 23 ist eine längliche Öffnung 21 vorgesehen, die auf derselben Achse wie die Öffnungen 27 angeordnet ist. An der äusseren Mantelfläche des ersten schalenartigen Teils 24 ist ein zweites schalenartiges Teil 28 mittels eines Filmscharniers 29 befestigt. In Figur 3 ist der Arm 19 gemäss Figur 2 in einer anderen Ansicht dargestellt, wobei die schalenartigen Teile 24 und 28 zusammengeklappt sind und somit einen Ring mit Stirnseiten bilden, in denen ein zylindrischer Raum 30 gebildet ist. An der Nahtstelle zwischen den schalenartigen Teilen 24 und 28 befindet sich das Filmscharnier 29. An dem den schalenartigen Teilen 24 und 28 abgewandten Ende des Hauptkörpers 23 befinden sich zwei Klipse 31, die zur Befestigung des Arms 19 an dem in Figur 1 dargestellten Hebel 8 dienen.

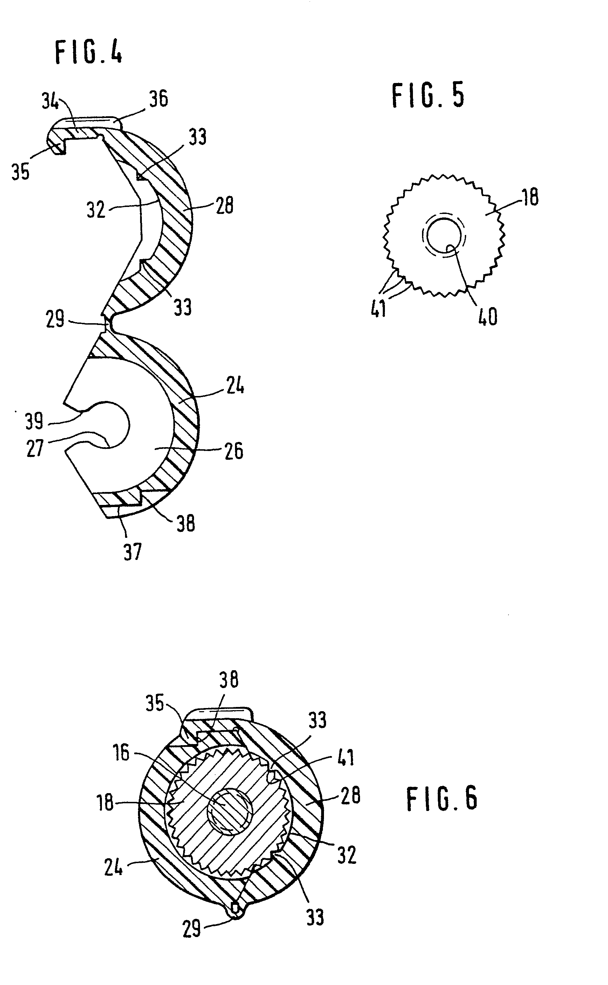

In Figur 4 ist der Schnitt nach der Linie IV–IV in Figur 2 dargestellt. Es ist daraus ersichtlich, wie die beiden schalenartigen Teile 24 und 28 mittels des Filmscharniers 29 verbunden sind. Das schalenartige Teil 28 weist an seiner inneren Mantelfläche 32 zwei um 90° auf der Umfangsfläche versetzte Vorsprünge 33 auf, die radial nach innen gerichtet sind. An dem dem Filmscharnier 29 entfernten Ende des schalenartigen Teils 28 befindet sich ein Fortsatz 34, der an seinem äussersten Ende mit einer Rastnase 35 versehen ist. An der Aussenseite des Fortsatzes 34 ist eine Verstärkungsrippe 36 angeordnet, die sich teilweise entlang der Mantelfläche des schalenartigen Teiles 28 erstreckt.

An dem dem Filmscharnier 29 entfernt liegenden Ende des schalenartigen Teiles 24 weist letzteres eine die Sehne eines Kreises bildende ebene Fläche 37 auf, die mit einer Hinterschneidung 38 versehen ist. Die Anordnung der Sehne 37 und Hinterschneidung 38 ist so getroffen, dass im zusammengeklappten Zustand der beiden schalenartigen Teile 24 und 28 die Rastnase 35 hinter der Hinterschneidung 38 einrastet und somit die beiden schalenartigen Teile zu einem Ring zusammenhält. Die in der Stirnwand 26 angeordnete Öffnung 27, die zur Aufnahme der Stange 16 in Figur 1 dient, ist mit einem von der Öffnung 27 ausgehenden radialen Schlitz 39 versehen, der im zusammengeklappten Zustand der schalenartigen Teile 24 und 28 auf das schalenartige Teil 28 gerichtet ist. Sind die schalenartigen Teile 24 und 28 auseinandergeklappt, so ist der Schlitz 39 nach aussen offen. Die Breite des Schlitzes 39 beträgt vorzugsweise das 0,7-fache des Durchmessers der Öffnung 27. Durch diese Anordnung des Schlitzes 39 ist es möglich, die Betätigungsstange 16 von aussen radial in die Öffnung 27 der Stirnseiten einzuführen und in diesen zu halten.

In Figur 5 ist die Rändelmutter 18 dargestellt, die in ihrer zentrischen Bohrung ein Innengewinde 40 und an ihrer Mantelfläche sechsunddreissig in axialer Richtung verlaufende Kerben 41 aufweist. Der Aussenumfang der Rändelmutter 18 entspricht der inneren Mantelfläche 32 des zylindrischen Raumes 30.

Figur 6 zeigt einen Schnitt nach der Linie VI–VI in Figur 1. Es ist aus dieser Darstellung ersichtlich, wie die beiden schalenartigen Teile 24 und 28 zusammengeklappt sind und die Rastnase 35 in die Hinterschneidung 38 des schalenartigen Teiles 24 eingreift. Ferner ist ersichtlich, dass die an der inneren Mantelfläche 32 angeordneten Vorsprünge 33 in Kerben 41 der Rändelmutter 18 eingreifen. Im Zentrum der Rändelmutter 18 befindet sich der das Gewinde 17 aufweisende Abschnitt der Betätigungsstange, das in das Innengewinde 40 der Rändelmutter 18 eingreift.

Zur Justierung der Absperrklappen durch Längeneinstellung des Betätigungsgestänges wird wie folgt vorgegangen: Die Rastnasenverbindung an den schalenartigen Teilen 24 und 28 wird ausser Eingriff gebracht und die schalenartigen Teile auseinandergeklappt. Durch das Abklappen des schalenartigen Teiles 28 stehen die Vorsprünge 33 nicht mehr mit den Kerben 41 der Rändelmutter 18 in Verbindung, da aufgrund der Ausbildung des Schlitzes 39 in den Wandteilen des schalenartigen Teiles 24 die Betätigungsstange 16 in den Öffnungen 27 gehalten wird und damit sich die Rändelmutter 18 weiterhin in dem schalenartigen Teil 24 befindet. Die Rändelmutter 18 ist nun jedoch drehbar und wird solange gedreht, bis beide Absperrklappen 6 und 7 völlig synchron die Schliessstellung für die Luftaustrittsstutzen 2–5 erreichen. Darauf wird das schalenartige Teil 28 wieder auf das schalenartige Teil 24 geklappt, bis die Rastnase 35 hinter die Hinterschneidung 38 greift, so dass die schalenartige Teile fest aufeinander liegen. In dieser Stellung befinden sich selbstverständlich die Vorsprünge 33 wieder in Kerben 41 der Rändelmutter 18.

**Patentansprüche**

1. Gestänge zur Betätigung und/oder Verbindung von Klappen einer Heizungs-, Lüftungs- oder Klimaanlage, dessen Enden zur Verbindung mit einem ersten und einem zweiten Hebel (8, 11), die an den Klappen (6, 7) befestigt sind, ausgebildet sind, wobei das Gestänge in seiner Länge justierbar ist und einen Arm (19) sowie eine Betätigungsstange (16) umfasst, die an einem Ende, bezogen auf die Längsachse an einem zweiten Hebel (11) drehfest gehalten ist und mindestens in einem Abschnitt ein Aussengewinde (17) aufweist, das in einem Innengewinde des an einem ersten Hebel (8) angreifenden Arms (19) angeordnet ist, wobei der an dem ersten Hebel (8) angreifende Arm (19) eine das Innengewinde (40) enthaltende Mutter (18) umfasst, die zum Zweck der Justierung gegenüber der Betätigungsstange (16) und dem Arm (19) drehbar gelagert ist, und der an dem ersten Hebel (8) angreifende Arm (19) einen im wesentlichen zylindrischen Raum (30) aufweist, der zwischen zwei schalenartigen, miteinander in Eingriff bringbaren Teilen (24, 28) gebildet ist, wobei die schalenartigen Teile (24, 28) mittels eines Filmscharniers (29) verbunden sind, und durch die schalenartigen Teile (24, 28) eine Klemm- oder Rastverbindung (33, 41) für die Mutter (18) gebildet ist, durch welche die Mutter (18) nach dem Justieren in ihrer Lage gegenüber dem Arm (19) und der Betätigungsstange (16) fixiert ist.

2. Gestänge nach Anspruch 1, dadurch gekennzeichnet, dass eines der schalenartigen Teile (28) eine Rastnase (35) aufweist, die in eine Hinterschneidung (38) des anderen schalenartigen Teils (24) eingreift.

3. Gestänge nach Anspruch 1, dadurch gekennzeichnet, dass die Mutter (18) eine gerändelte Mantelfläche mit einer Vielzahl von Kerben (41) aufweist und in dem zylindrischen Raum (30) mindestens ein Vorsprung (33) vorgesehen ist, der wahlweise mit einer der Kerben (41) in Eingriff bringbar ist.

4. Gestänge nach Anspruch 3, dadurch gekennzeichnet, dass zwei gemeinsam in einem der schalenförmigen Teile (28) angeordnete Vorsprünge (33) vorgesehen sind, die vorzugsweise in einem Winkel von 90° bezogen auf den Umfang der Mutter (18) angeordnet sind.

5. Gestänge nach Anspruch 1, dadurch gekennzeichnet, dass eines der schalenartigen Teile (24) an der der Betätigungsstange (16) zugewandten Seite des Arms (19) unbeweglich angeordnet ist und an seinen Stirnseiten (25, 26) Wandteile aufweist, in denen jeweils eine Öffnung (27) zur Aufnahme der Betätigungsstange (16) vorgesehen ist.

6. Gestänge nach Anspruch 5, dadurch gekennzeichnet, dass in den Wandteilen (25, 26) jeweils ein von den Öffnungen (27) ausgehender radialer, auf das gegenüberliegende schalenartige Teil (28) gerichteter und nach aussen offener Schlitz (39) angeordnet ist, dessen Breite vorzugsweise etwa das 0,7-fache des Durchmessers der Öffnung (27) beträgt.

7. Gestänge nach Anspruch 1, dadurch gekennzeichnet, dass die axiale Länge des zylindrischen Raumes (30) 0,05 bis 0,1 mm grösser ist als die axiale Länge der Mutter (18).

8. Gestänge nach einem der vorhergehenden Ansprüche, dadurch gekennzeichnet, dass der an dem ersten Hebel (8) angreifende Arm (19) Klipse (31) aufweist, die in eine Öffnung (10) des ersten Hebels (8) eingreifen.

9. Gestänge nach einem der vorhergehenden Ansprüche, dadurch gekennzeichnet, dass das drehfest gehaltene Ende (15) der Betätigungsstange (18) rechtwinkelig abgebogen ist und in eine Öffnung (12) eines zweiten Hebels (11) eingreift.

10. Gestänge nach Anspruch 3, dadurch gekennzeichnet, dass die Anzahl der Kerben (41) der Rändelmutter (18) vierundzwanzig bis vierzig beträgt und die Kerben (41) in axialer Richtung der Rändelmutter (18) verlaufen.

**Claims**

1. Linkage for operating and/or connecting flap-type valves of a heating, ventilating or air conditioning system, the ends of which are constructed for connection to a first and a second lever (8, 11), which are secured to the flap-type valves (6, 7), whereby the linkage can be adjusted over its length and includes an arm (19) as well as an operating rod (16), which is held at one end in relation to the longitudinal axis at a second lever (11) so that it cannot be rotated and is provided at least in one section with an external thread (17) which is disposed in an internal thread of the arm (19) acting at a first lever (8), whereby the arm (19) acting at the first lever (8) includes a nut (18) containing the internal thread (40) which is rotatably mounted for the purpose of the adjustment in relation to the operating rod (16) and the arm (19) and the arm (19) acting at the first lever (8) is provided with a substantially cylindrical space (30) which is formed between two shell-type parts (24, 28) which can be brought into engagement with each other, whereby the shell-type parts (24, 28) are connected by means of a film hinge (29) and a clamping or click-stop connection (33, 41) is formed for the nut (18) by the shell-type parts (24, 28), by means of which the nut (18) after the adjustment is fixed in its position in relation to the arm (19) and the operating rod (16).

2. Linkage according to claim 1, characterised in that one of the shell-type parts (28) is provided with a detent (35), which engages with an undercut (38) of the other shell-type part (24).

3. Linkage according to claim 1, characterised in that the nut (18) is provided with a knurled shell surface with a multiplicity of notches (41) and at least one protrusion (33) is provided in the cylindrical space (30), which optionally can be brought into engagement with one of the notches (41).

4. Linkage according to claim 3, characterised in that two protrusions (33) are provided which are arranged jointly in one of the shell-type parts (28), and which preferably are disposed at an angle of 90° in relation to the periphery of the nut (18).

5. Linkage according to claim 1, characterised in that one of the shell-type parts (24) is arranged so that it cannot be moved at the side of the arm (19) facing the operating rod (16) and which is provided at its faces (25, 26) with wall sections, in which in each case an opening (27) is provided for receiving the operating rod (16).

6. Linkage according to claim 5, characterised in that in each case a radial slot (39) which is directed to the opposite shell-type part (28) and which is open outwards and which comes out of the openings (27) is arranged in the wall sections (25, 26), the width of the slot being preferably approximately 0.7 times the diameter of the opening (27).

7. Linkage according to claim 1, characterised in that the axial length of the cylindrical space (30) is 0.05 to 0.1 mm larger than the axial length of the nut (18).

8. Linkage according to one of the preceding claims, characterised in that the arm (19) acting on the first lever (8) is provided with clips (31), which engage in an opening (10) of the first lever (8).

9. Linkage according to one of the preceding claims, characterised in that the end (15) of the operating rod (18) which is held so that it cannot be rotated is bent at right angles and engages in an opening (12) of a second lever (11).

10. Linkage according to claim 3, characterised in that the number of notches (41) of the knurled nut (18) is between 24 and 40 and the notches (41) run in the axial direction of the knurled nut (18).

**Revendications**

1. Tringlerie destinée à actionner et/ou relier des volets d'une installation de chauffage, d'aération ou de climatisation, dont les extrémités sont réalisées de manière à être reliées à des premier et second leviers (8, 11), qui sont fixés sur les volets (6, 7), la tringlerie ayant une longueur réglable et comportant un bras (19) ainsi qu'une tige d'actionnement (16), dont une extrémité est maintenue avec blocage en rotation par rapport à l'axe longitudinal sur un second levier (11) et comporte, au moins sur une section, un filetage extérieur (17) qui est disposé dans un taraudage du bras (19) accroché à un premier levier (8), et dans laquelle le bras (19) accroché au premier levier (8) comporte un écrou (18) muni du taraudage (40) et monté avec blocage en rotation de manière à pouvoir être réglé par rapport à la tige d'actionnement (16) et au bras (19), et le bras (19) accroché au premier levier (8) comporte une cavité sensiblement cylindrique (30) formée entre deux parties (24, 28) en forme de coques pouvant être amenées réciproquement en prise et reliées au moyen d'une charnière formant pellicule (29), et dans laquelle les parties en forme de coques (24, 28) forment, pour l'écrou (18), un dispositif de liaison par serrage ou encliquetage (33, 41), grâce auquel, après l'ajustement, l'écrou (18) est bloqué en position par rapport au bras (19) et à la tige d'actionnement (16).

2. Tringlerie selon la revendication 1, caractérisée en ce que l'une des parties en forme de coques (28) comporte un bec d'encliquetage (35), qui s'engage dans une partie en dépouille (38) de l'autre partie en forme de coque (24).

3. Tringlerie selon la revendication 1, caractérisée en ce que l'écrou (18) comporte une surface enveloppe moletée comportant une multiplicité d'encoches (41) et qu'il est prévu, dans la cavité cylindrique (30) au moins un organe saillant (33) qui peut, au choix, être amené en prise avec l'une des encoches (41).

4. Tringlerie selon la revendication 3, caractérisée en ce qu'il est prévu deux organes saillants (33) disposés en commun dans l'une des parties en forme de coques (28) et ce de préférence en faisant entre eux un angle de 90° sur le pourtour de l'écrou (18).

5. Tringlerie selon la revendication 1, caractérisée en ce que l'une des parties en forme de coques (24) est montée immobile sur le côté du bras (19) tourné vers la tige d'actionnement (16) et possède, sur ses faces frontales (25, 26), des éléments de paroi, dans lesquels se trouvent ménagées des ouvertures respectives (27) servant à recevoir la tige d'actionnement (16).

6. Tringlerie selon la revendication 5, caractérisée en ce que dans les éléments de paroi (25, 26) se trouvent ménagées des fentes radiales respectives (39), qui portent des ouvertures (27), s'étendent vers la partie en forme de coque opposée (28) et débouchent à l'extérieur et dont la largeur est égale de préférence approximativement à 0,7 fois le diamètre de l'ouverture (27).

7. Tringlerie selon la revendication 1, caractérisée en ce que la longueur axiale de la cavité cylindrique (30) est supérieure, de 0,05 à 0,1 mm, à la longueur axiale de l'écrou (18).

8. Tringlerie selon l'une des revendications précédentes, caractérisée en ce que le bras (19) accroché au premier levier (8) comporte des organes élastiques d'encliquetage (31), qui s'engagent dans une ouverture (10) du premier levier (8).

9. Tringlerie selon l'une des revendications précédentes, caractérisée en ce que l'extrémité (15), maintenue avec blocage en rotation, de la tige d'actionnement (18) est coudée à angle droit et s'engage dans une ouverture (12) d'un second levier (11).

10. Tringlerie selon la revendication 3, caractérisée en ce que le nombre des encoches (41) de l'écrou moleté (18) est compris entre vingt-quatre et quarante et que les encoches (41) s'étendent dans la direction axiale de l'écrou moleté (18).

FIG.1

# FIG. 2

# FIG. 3

FIG.4

FIG.5

FIG.6